# EUROPEAN PATENT APPLICATION

(11) **EP 4 628 475 A1**
(43) Date of publication of application: **08.10.2025**
(21) Application number: 25167837.1
(22) Date of filing: 01.04.2025
(51) Int. Cl.: C04B 41/00, C04B 41/52, C04B 41/89, F01D 5/28, C04B 111/00

(54) **MULTI-CONSTITUENT ENVIRONMENTAL BARRIER COATING**

(30) Priority: 05.04.2024 US 202418628472
(71) Applicant: RTX Corporation, Farmington, CT 06032 (US)
(72) Inventor: JACKSON III, Richard Wesley, Mystic, 06355 (US); TANG, Xia, West Hartford, 06107 (US); BEALS, James T., West Hartford, 06107 (US); DEACON, Ryan M., Farmington, 06032 (US)
(74) Representative: Dehns

(57) **Abstract**

Environmental barrier coatings or coating systems (100) that contain a bond coat (120), the bond coat (120) containing an oxide matrix (128), and dispersed throughout the oxide matrix (128) an oxidant gettering phase (122), a SiO₂ based phase, that may be amorphous or crystalline, a crystalline phase (124), and an amorphous oxide phase (126), which is a self-healing phase (128) having the ability to soften or melt and flow into cracks formed in the oxide matrix (128) at predetermined temperatures that are below the melting temperature of the oxide matrix (128), where the amorphous oxide phase (126) contains an alkaline earth alumino-silicate, and the crystalline phase (124) contains Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅ ,Mg₂Al₄Si₅O₁₈, BaAl₂Si₂O₈ , BaZrSi₃O_{9,} Y₂Si₂O₇, Yb₂Si₂O₇, and/or Al₂O₃, and methods for protecting ceramic matrix composite materials (130).

## Description

### Field

The subject matter disclosed herein relates to an environmental barrier coating (EBC) with multicomponent bond coat high temperature protection.

### Background

Environmental barrier coatings increase the durability of hot-section components in the fields of turbines and engine components as well as exhaust systems generally, e.g., as combustor liners, seals, especially in engines, and coatings on blades. These coating systems have a bond coat layer that is designed to limit the flux of oxidants such as oxygen and steam to ceramic matrix composites (CMC) from the combustion gas. The durability and efficacy of the EBC can be limited by the presence of microcracks that develop in the bond coat that can act as pathways for oxidants and as flaws for delamination growth.

A coating addressing some of the concerns mentioned above is disclosed, for example, in US 11,505,506.

A problem, among many advantages to the subject matter disclosed herein, is the achievement of providing combinations of components in the coating system that self-heals upon the formation of cracks in the environmental barrier coating. By this, the durability of EBC can be improved by reducing the oxidant flux through the bond coat, decreasing the rate of degradation of the underlaying substrate, such as a silicon containing substrate, for example, an CMC.

### Summary

From one aspect, there is provided an environmental barrier coating having a bond coat layer, the bond coat layer comprising an oxide matrix, and dispersed throughout the oxide matrix:
i) an oxidant gettering phase that forms silicon oxide, i.e., that forms SiO₂ upon reaction with oxidants,
ii) a SiO₂ based phase, that may be amorphous or crystalline,
iii) a crystalline phase, and
iv) an amorphous oxide phase, which is a self-healing phase having the ability to soften or melt and flow into cracks formed in the oxide matrix at predetermined temperatures that are below the melting temperature of the oxide matrix,
wherein
the amorphous oxide phase comprises an alkaline earth alumino-silicate glass, and the crystalline phase comprises Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅, Mg₂Al₄Si₅O₁₈, BaAl₂Si₂O₈ , BaZrSi₃O₉, Y₂Si₂O₇, Yb₂Si₂O₇, and/or Al₂O₃, and in case the SiO₂ based phase of ii) is amorphous, the crystalline phase may additionally include among the options above crystalline SiO₂.

In any of the examples disclosed herein regarding the environmental barrier coating having a bond coat layer, the SiO₂ may be present as a glass or as a crystalline phase in the cristobalite, tridymite, or quartz polymorphs.

In any of the examples disclosed herein regarding the environmental barrier coating having a bond coat layer, the alkaline earth alumino-silicate glass may be present as a magnesium alumino-silicate glass, a calcium alumino-silicate glass, barium alumino-silicate glass or a strontium alumino-silicate or mixtures thereof. Mixtures can include a barium magnesium alumno-silicate glass or a calcium magnesium alumino-silicate glass.

In any of the examples disclosed herein regarding the environmental barrier coating having a bond coat layer, wherein the amorphous oxide phase comprises a calcium alumino-silicate glass with an incipient melting point between 1150 and 1300 °C and viscosity between 200 and 20,000 Pa•s at 1300 °C and 1 and 500 Pa•s at 1500 °C, which calcium alumino-silicate glass is optionally doped with one or more rare earth elements or transition metal elements.

In any of the examples disclosed herein regarding the environmental barrier coating having a bond coat layer, the amorphous oxide phase can comprise a barium-magnesium alumino silicate glass.

In any of the examples disclosed herein regarding the environmental barrier coating having a bond coat layer, wherein the barrier coating contains in the bond coat layer the oxide matrix in an amount of 1 to 30 vol. %, for example, 5 to 30 vol. %, 5 to 25 vol. %, 5 to 20 vol. %, 10 to 30 vol. %, 10 to 20 vol. %, 20 to 25 vol. % and 25 vol. %, including any of these values identified independently alone also,
i) the oxidant gettering phase in an amount of 25 to 75 vol. %, for example, 40 to 75 vol. %, 40 to 70 vol. %, 50 to 60 vol. % and 50 vol. %, including any of these values identified independently alone also,
ii) the crystalline phase in an amount of 5 to 50 vol. %, for example, 10 to 30 vol. %, 20 to 25 vol.% and 25 vol. %, including any of these values identified independently alone also, and iii) the amorphous oxide phase in an amount of 1 to 10 vol. %, for example, 1 to 10 vol. %, 3 to 5 vol. % and 5 vol. %, including any of these values identified independently alone also.

In any of the examples disclosed herein regarding the environmental barrier coating having a bond coat layer, the oxide matrix can be SiO₂.

In any of the examples disclosed herein regarding the environmental barrier coating having a bond coat layer, the oxidant gettering phase can be SiₓO_{y}C_{z} where 0.5≤x<1; 0≤y<2; 0≤z<2, or can be Si₃N₄ or SiCN.

In the multi-phase equilibrium one of the phases present is silicon oxide, SiO₂. Also, the composition of the gettering phase can be chosen such that it reacts with oxidant species to form a SiO₂ oxide scale, that is in equilibrium with the mixture. Some or all of the gettering particles listed perform their gettering function by reacting with oxidant species (e.g. O₂ and H₂O) to form an SiO₂ reaction product. The SiO₂ reaction product is an oxide scale that grows on the surface of the particle.

In any of the examples disclosed herein regarding the environmental barrier coating having a bond coat layer, the oxidant gettering phase can be SiC.

Table 1 provides a list of examples in which SiC is the gettering phase, the self-healing glass is in a calcium alumino-silicate and certain embodiments contain phases ZrSiO₄; mullite Al₆Si₂O₁₃; Ca₂ZrSi₄O₁₂; zirconia ZrO₂, and anorthite CaAl₂Si₂O₄. Using thermodynamic database FactSage, the volume fraction of liquid (molten oxide) is calculated at 1300°C and 1500°C and the corresponding viscosity is calculated at each temperature. Where CAS-A is 26% CaO, 15% AlO_{1.5}, and 59% SiO₂; CAS-B is 15% CaO, 30% AlO_{1.5}, and 55% SiO₂; CAS-C is 20% CaO, 30% AlO_{1.5}, and 50% SiO₂.

**Table 1.**

| Composition, volume % | | | | | | | | | | | | | Viscosity, Pa•s | |
|---|---|---|---|---|---|---|---|---|---|---|---|---|---|---|
| # | Gettering phase SiC | Self-healing glass | | | Matrix phases | | | | | | Vol.% liquid | | | |
| | | CAS-A | CAS-B | CAS-C | SiO₂ | ZrSiO₄ | Ca₂ZrSi₄O₁₂ | ZrO₂ | CaAl₂Si₂O₈ | Al₆Si₂O₁₃ | 1300°C | 1500°C | 1300°C | 1500°C |
| 1 | 50 | 5 | 0 | 0 | 30 | 15 | 0 | 0 | 0 | 0 | 3.8% | 5.4% | 403 | 36 |
| 2 | 50 | 5 | 0 | 0 | 20 | 25 | 0 | 0 | 0 | 0 | 3.8% | 5.3% | 403 | 36 |
| 3 | 50 | 5 | 0 | 0 | 20 | 0 | 25 | 0 | 0 | 0 | 3.8% | 21.4% | 281 | 4 |
| 4 | 50 | 5 | 0 | 0 | 20 | 10 | 15 | 0 | 0 | 0 | 3.3% | 14.6% | 403 | 5 |
| 5 | 50 | 5 | 0 | 0 | 20 | 15 | 10 | 0 | 0 | 0 | 3.8% | 11.9% | 403 | 7 |
| 6 | 50 | 5 | 0 | 0 | 20 | 15 | 0 | 10 | 0 | 0 | 3.8% | 5.3% | 403 | 36 |
| 7 | 50 | 5 | 0 | 0 | 20 | 15 | 0 | 10 | 0 | 0 | 0.0% | 6.7% | 1177 | 432 |
| 8 | 50 | 5 | 0 | 0 | 20 | 25 | 0 | 0 | 0 | 0 | 0.0% | 6.6% | 5699 | 432 |
| 9 | 50 | 0 | 5 | 0 | 20 | 25 | 0 | 0 | 0 | 0 | 2.2% | 7.4% | 1177 | 255 |
| 10 | 50 | 0 | 5 | 0 | 10 | 35 | 0 | 0 | 0 | 0 | 3.7% | 5.2% | 403 | 36 |
| 11 | 50 | 0 | 0 | 5 | 10 | 21 | 14 | 0 | 0 | 0 | 3.7% | 14.3% | 403 | 6 |
| 12 | 50 | 5 | 0 | 0 | 10 | 0 | 35 | 0 | 0 | 0 | 3.7% | 27.1% | 403 | 4 |
| 13 | 50 | 5 | 0 | 0 | 20 | 0 | 0 | 0 | 25 | 0 | 7.0% | 30.8% | 1289 | 169 |
| 14 | 50 | 5 | 0 | 0 | 20 | 0 | 0 | 0 | 15 | 10 | 0.0% | 28.0% | 17033 | 251 |
| 15 | 50 | 5 | 0 | 0 | 20 | 15 | 0 | 0 | 10 | 0 | 7.6% | 19.5% | 1177 | 214 |

Table 2 provides a list of examples in which SiC is the gettering phase, the self-healing glass is in a calcium alumino-silicate and certain embodiments contain phases HfSiO₄; mullite Al₆Si₂O₁₃; Ca₂HfSi₄O₁₂; zirconia HfO₂, and/or anorthite CaAl₂Si₂O₄.

**Table 2.**

| Composition, volume % | | | | | | | | | | |
|---|---|---|---|---|---|---|---|---|---|---|
| # | Gettering phase SiC | Self-healing glass | | | Matrix phases | | | | | |
| | | CAS-A | CAS-B | CAS-C | SiO₂ | HfSiO₄ | Ca₂HfSi₄O₁₂ | HfO₂ | CaAl₂Si₂O₈ | Al₆Si₂O₁₃ |
| 1 | 50 | 5 | 0 | 0 | 30 | 15 | 0 | 0 | 0 | 0 |
| 2 | 50 | 5 | 0 | 0 | 20 | 25 | 0 | 0 | 0 | 0 |
| 3 | 50 | 5 | 0 | 0 | 20 | 0 | 25 | 0 | 0 | 0 |
| 4 | 50 | 5 | 0 | 0 | 20 | 10 | 15 | 0 | 0 | 0 |
| 5 | 50 | 5 | 0 | 0 | 20 | 15 | 10 | 0 | 0 | 0 |
| 6 | 50 | 5 | 0 | 0 | 20 | 15 | 0 | 10 | 0 | 0 |
| 7 | 50 | 5 | 0 | 0 | 20 | 15 | 0 | 10 | 0 | 0 |
| 8 | 50 | 5 | 0 | 0 | 20 | 25 | 0 | 0 | 0 | 0 |
| 9 | 50 | 0 | 5 | 0 | 20 | 25 | 0 | 0 | 0 | 0 |
| 10 | 50 | 0 | 5 | 0 | 10 | 35 | 0 | 0 | 0 | 0 |
| 11 | 50 | 0 | 0 | 5 | 10 | 21 | 14 | 0 | 0 | 0 |
| 12 | 50 | 5 | 0 | 0 | 10 | 0 | 35 | 0 | 0 | 0 |
| 13 | 50 | 5 | 0 | 0 | 20 | 0 | 0 | 0 | 25 | 0 |
| 14 | 50 | 5 | 0 | 0 | 20 | 0 | 0 | 0 | 15 | 10 |
| 15 | 50 | 5 | 0 | 0 | 20 | 15 | 0 | 0 | 10 | 0 |

In Table 3, a list of examples in which SiC is the gettering phase, the self-healing glass is in a barium magnesium alumino-silicate and certain embodiments contain phases with phases zircon, ZrSiO₄; mullite Al₆Si₂O₁₃; cordierite Mg₂Al₄Si₅O₁₈; zirconia ZrO₂, and/or celsian BaAl₂Si₂O₄. Using thermodynamic database FactSage, the volume fraction of liquid (molten oxide) is calculated at 1300°C and 1500°C and the corresponding viscosity is calculated at each temperature.

**Table 3.**

| Composition, volume % | | | | | | | | | | | Viscosity, Pa•s | |
|---|---|---|---|---|---|---|---|---|---|---|---|---|
| # | Gettering phase SiC | Self-healing glass BMAS | Matrix phases | | | | | | Vol.% liquid | | | |
| | | | SiO₂ | ZrSiO₄ | Al₆Si₂O₁₃ | M9₂Al₄Si₅O₁₈ | ZrO₂ | BaAl₂Si₂O₈ | 1300°C | 1500°C | 1300°C | 1500°C |
| 1 | 50 | 5 | 30 | 15 | 0 | 0 | 0 | 0 | 3.1% | 7.1% | 6899 | 425 |
| 2 | 50 | 5 | 20 | 25 | 0 | 0 | 0 | 0 | 3.0% | 7.0% | 6901 | 425 |
| 3 | 50 | 5 | 20 | 0 | 15 | 0 | 0 | 0 | 3.0% | 12.2% | 19936 | 994 |
| 4 | 50 | 5 | 20 | 10 | 15 | 0 | 0 | 0 | 3.1% | 16.8% | 18247 | 783 |
| 5 | 50 | 5 | 20 | 15 | 10 | 0 | 0 | 0 | 3.2% | 16.9% | 18247 | 783 |
| 6 | 50 | 5 | 20 | 15 | 0 | 0 | 10 | 0 | 2.8% | 8.6% | 18247 | 229 |
| 7 | 50 | 5 | 20 | 0 | 0 | 25 | 0 | 0 | 3.0% | 32.4% | 7279 | 150 |
| 8 | 50 | 5 | 20 | 0 | 10 | 15 | 0 | 0 | 3.1% | 27.2% | 19936 | 229 |
| 9 | 50 | 5 | 20 | 0 | 0 | 0 | 0 | 25 | 17.7% | 23.0% | 13614 | 805 |
| 10 | 50 | 5 | 20 | 0 | 10 | 0 | 0 | 15 | 13.7% | 22.8% | 19936 | 473 |

In any of the examples disclosed herein regarding the environmental barrier coating having a bond coat layer, the bond coat layer can comprise:
50% vol.% SiC gettering phase,
25 vol.% ZrSiO₄,
20 vol.% SiO₂ matrix phase, and
5 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C.

In any of the examples disclosed herein regarding the environmental barrier coating having a bond coat layer, the bond coat layer can comprise:
50% vol.% SiC gettering phase,
25 vol.% Ca₂HfSi₄O₁₂,
20 vol.% SiO₂ matrix phase, and
5 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C.

In any of the examples disclosed herein regarding the environmental barrier coating having a bond coat layer, the bond coat layer can comprise:
40 - 70 vol.% SiC gettering phase,
10 - 30 vol.% ZrSiO₄,
10 - 30 vol.% SiO₂ matrix phase, and
5 - 10 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C.

In any of the examples disclosed herein regarding the environmental barrier coating having a bond coat layer, the bond coat layer can comprise:
40-70% vol.% SiC gettering phase,
5-50 vol.% ZrSiO₄,
5-20 vol.% SiO₂ matrix phase, and
1-10 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C.

In any of the examples disclosed herein regarding the environmental barrier coating having a bond coat layer, the bond coat layer can comprise:
50% vol.% SiC gettering phase,
25 vol.% Al₆Si₂O₁₃,
20 vol.% SiO₂ matrix phase, and
5% self-healing phase composed of a calcium alumino-silicate glass with an incipient melting point between 1150 and 1200°C and viscosity between 1,000 and 50,000 Pa•s at 1260°C and 10 and 500 Pa•s at 1482°C.

In any of the examples disclosed herein regarding the environmental barrier coating having a bond coat layer, the bond coat layer comprise:
50% vol.% SiC gettering phase,
20-25 vol.% Al₆Si₂O₁₃
20-25 vol.% SiO₂ matrix phase, and
3-5 vol. % self-healing phase composed of a rare earth aluminate silicate glass with an incipient melting point between 1150 and 1200°C and viscosity between 1,000 and 50,000 Pa•s at 1260°C and 10 and 500 Pa•s at 1482°C.

In any of the examples disclosed herein regarding the environmental barrier coating having a bond coat layer, the bond coat layer can comprise
40-70% vol.% SiC gettering phase,
5-50 vol.% ZrSiO₄,
5-20 vol.% SiO₂ matrix phase, and
1-10 vol. % self-healing phase composed of a ytterbium aluminum silicate glass with an incipient melting point between 1350 and 1500°C and
viscosity between 1,000 and 50,000 Pa•s at 1260 °C and 10 and 500 Pa•s at 1482 °C.

In any of the examples disclosed herein regarding the environmental barrier coating having a bond coat layer, the oxidant gettering phase, the crystalline phase and/or the amorphous oxide phase can be dispersed in the oxide matrix in the form of discrete particles.

In any of the examples disclosed herein regarding the environmental barrier coating having a bond coat layer, the crystalline phase can comprise Ca₂HfSi₄O₁₂.

In any of the examples disclosed herein regarding the environmental barrier coating having a bond coat layer, the crystalline phase can comprise Mg₂Al₄Si₅O₁₈.

In any of the examples disclosed herein regarding the environmental barrier coating having a bond coat layer, the crystalline phase can comprise BaAl₂Si₂O₈.

In any of the examples disclosed herein regarding the environmental barrier coating having a bond coat layer, the crystalline phase can comprise BaZrSi₃O₉.

In any of the examples disclosed herein regarding the environmental barrier coating having a bond coat layer, the crystalline phase can comprise Mg₂Al₄Si₅O₁₈, which can be in equilibrium with MAS glasses with higher MgO and Al₂O₃ concentrations.

In any of the examples disclosed herein regarding the environmental barrier coating having a bond coat layer, the crystalline phase can comprise BaAl₂Si2O₈, which is in equilibrium with BAS glasses with higher BaO and Al₂O₃ concentrations.

In any of the examples disclosed herein regarding the environmental barrier coating having a bond coat layer, the crystalline phase can comprise BaZrSi₃O₉, which is in equilibrium with BAS glasses with higher BaO and lower Al₂O₃ concentrations.

In any of the examples disclosed herein regarding the environmental barrier coating having a bond coat layer, Y₂Si₂O₇ can be an additive in Y₂O₃-Al₂O₃-SiO₂ glasses.

In any of the examples disclosed herein regarding the environmental barrier coating having a bond coat layer, Yb₂Si₂O₇ can be an additive in Yb₂O₃-Al₂O₃-SiO₂ glasses.

In any of the examples disclosed herein regarding the environmental barrier coating having a bond coat layer, mixtures of Y₂Si₂O₇ and Yb₂Si₂O₇ can be an additive(s) in Y₂O₃ -Yb₂O₃-Al₂O₃-SiO₂ glasses.

In any of the examples disclosed herein regarding the environmental barrier coating having a bond coat layer, a rare earth silicate can be an additive in rare earth-Al₂O₃-SiO₂ glasses.

There is also provided an engine component having any of the coatings disclosed herein, including but not limited to a turbine vane or blade or turbine engine component, comprising thereon any of the coatings described herein.

There is also provided an environmental coating system on a silicon containing material, which coating system contains as a bond coat layer, and on top thereof a protective top coat, wherein the bond coat layer comprises
an oxide matrix,
and dispersed throughout the oxide matrix:
   i) an oxidant gettering phase that forms silicon oxide, i.e., that forms SiO₂ upon reaction with oxidants,
   ii) a SiO₂ based phase, that may be amorphous or crystalline,
   iii) a crystalline phase, and
   iv) an amorphous oxide phase, which is a self-healing phase having the ability to soften or melt and flow into cracks formed in the oxide matrix at predetermined temperatures that are below the melting temperature of the oxide matrix,
wherein
the amorphous oxide phase comprises a calcium alumino-silicate glass or a barium-magnesium alumino silicate glass, and
the crystalline phase comprises Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅, Mg₂Al₄Si₅O₁₈, BaAl₂Si₂O₈, BaZrSi₃O₉, Y₂Si₂O₇, Yb₂Si₂O₇, and/or Al₂O₃, and in case the SiO₂ based phase of ii) is amorphous, the crystalline phase may additionally include among the options above crystalline SiO₂.

In any of the examples disclosed herein regarding the environmental coating system on a silicon containing material, the alkaline earth alumino-silicate glass may be present as a magnesium alumino-silicate glass, a calcium alumino-silicate glass, barium alumino-silicate glass or a strontium alumino-silicate or mixtures thereof. Mixtures can include a barium magnesium alumno-silicate glass or a calcium magnesium alumino-silicate glass.

In any of the examples disclosed herein concerning the environmental coating system on a silicon containing material, the silicon containing material can be a ceramic matrix composite material.

In any of the examples disclosed herein concerning the environmental coating system on a silicon containing material, the the top coat can comprise binary or multicomponent oxides, HfO₂, ZrO₂, Gd₂Hf₂O₇, Gd₂Zr₂O₇, refractory metal oxides, silicates, rare earth-monosilicates or disilicates, alkaline earth alumino silicates, or silicates of hafnium or zirconium.

There is also provided a method for protecting a ceramic matrix composite material comprising applying thereon a bond coat layer and on top thereof a top coat, wherein the bond coat layer comprises
an oxide matrix,
and dispersed throughout said oxide matrix:
   i) an oxidant gettering phase that forms silicon oxide, i.e., that forms SiO₂ upon reaction with oxidants,
   ii) a SiO₂ based phase, that may be amorphous or crystalline,
   iii) a crystalline phase, and
   iv) an amorphous oxide phase, which is a self-healing phase having the ability to soften or melt and flow into cracks formed in the oxide matrix at predetermined temperatures that are below the melting temperature of the oxide matrix,
wherein
the amorphous oxide phase comprises a calcium alumino-silicate glass or a barium-magnesium alumino silicate glass, and
the crystalline phase comprises Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅ ,Mg₂Al₄Si₅O₁₈, BaAl₂Si₂O₈ , BaZrSi₃O₉, Y₂Si₂O₇, Yb₂Si₂O₇, and/or Al₂O₃, and in case the SiO₂ based phase of ii) is amorphous, the crystalline phase may additionally include among the options above crystalline SiO₂.

In any of the examples disclosed herein regarding the method for protecting a ceramic matrix composite material, the alkaline earth alumino-silicate glass may be present as a magnesium alumino-silicate glass, a calcium alumino-silicate glass, barium alumino-silicate glass or a strontium alumino-silicate or mixtures thereof. Mixtures can include a barium magnesium alumno-silicate glass or a calcium magnesium alumino-silicate glass.

### Detailed Description

Disclosed herein are environmental barrier coatings, including bond coat system(s), that contain a gettering phase, a crystalline phase or phases, and a self-healing amorphous oxide phase that inhibits the flux of oxidants to the CMC by flowing into microcracks in the coating at component operating temperatures.

The bond coat contains the gettering phase, crystalline phase or phases, and self-healing amorphous oxide phase in a matrix, such as an SiO₂ matrix.

The matrix of the bond coat, i.e., the bond coat matrix, may have a porosity of 1 to 30 % or 5 to 20%.

In one embodiment, the gettering phase, crystalline phase or phases, and self-healing amorphous oxide phase are each independently present as discrete particles from one another, meaning the gettering phase is present as discrete particles that are not bonded or melted to either the crystalline phase or the self-healing amorphous oxide phase.

In an alternative embodiment, the self-healing and matrix phase may be bonded or chemically attached to the gettering phase.

Noted is that dilution of the matrix phase into the self-healing phase with time at exposure to elevated temperatures is likely to occur.

Noted is that when the self-healing phase is incorporated into the coating, it is provided as ground up oxide particles. It does however migrate during processing and through the life of the coating and does not stay in its original location. Finer sizes of the original particles may make the distribution more uniform and the coating perform better.

Regarding the gettering phase, the particles thereof are sized to meet the life of the coating and are relatively large.

The oxidant getter phase in one embodiment is SiₓO_{y}C_{z} where 0.5≤x<1; 0≤y<2; 0≤z<2, for example SiC. Alternative options include Si₃N₄ or SiCN.

The self-healing behavior is controlled by the incipient melting temperature of the self-healing amorphous oxide phase, which can be a glass, and the temperature dependent viscosity of the glass. The incipient melting temperature is lower than a segment of operating temperature of the coating at critical locations of the component, such that conditions for re-melting regularly occur. Additionally, the composition of the glass is such that the viscosity is low enough to flow into cracks during operation but not so low the that the glass flows into adjacent material, for example, the top coat or CMC.

The crystalline phase(s) minimize the volume of SiO₂ matrix that can micro-crack, i.e., make the matrix even more durable than expected by the addition of particulate crystalline materials. Interaction between the crystalline phases and the self-healing glass tend to shift the composition of the glass with the nature of the shift governed by chemical thermodynamics. As such, the composition of the coating is not solely controlled by the initial constitution, but also by the reaction and mixing of the phases. The criteria for achieving the desired self-healing glass properties is achieved through compositional ranges of the system.

Options for a suitable crystalline phase include Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅, Mg₂Al₄Si₅O₁₈, BaAl₂Si₂O₈, BaZrSi₃O₉, Y₂Si₂O₇, Yb₂Si₂O₇, and/or Al₂O₃.

Noted is that an environmental protective layer that has been on a component exposed to high heat conditions, such as in a turbine, slightly changes over time as a result of the melting and re-melting of the amorphous oxide phase which migrates/flows into micro cracks developed during use of the component. In this regard, the initially particulate glass, e.g., the amorphous oxide phase, in the EBC coating may take on various shapes of the cracks that have developed, and may be fused to various other particulate components in said SiO₂ matrix.

The self-healing phase can include alkali and alkaline earth aluminum silicates, rare earth aluminum silicate glasses, the SiO₂ itself, as well as any representative glass/glass ceramics such as barium alumino silicate (BAS), barium-magnesium alumino silicate (BMAS), lithium alumino silicate (LAS), strontium alumino silicate (SAS), ytterbium aluminum silicate. Noted is that SiO₂ on its own has a very high melting temp and is crystalline after processing, but it can be pulled into and dilute the self-healing phases at lower temps.

The components to be protected by the coating can be constructed from materials containing silicon and can be a ceramic matrix composite material, a monolithic ceramic, a silicon-based or silicon containing ceramic substrate or a silicon containing metal alloy. In an exemplary embodiment, the component to be protected can be silicon containing ceramic material such as, for example, silicon carbide, silicon nitride, silicon oxy-nitride and silicon aluminum oxy-nitride, combinations thereof. In accordance with a particular embodiment, the silicon containing ceramic substrate comprises a silicon containing matrix with reinforcing materials such as fibers, particles and the like and, more particularly, a silicon based matrix which is fiber-reinforced.

Particularly suitable ceramic substrates are a silicon carbide fiber-reinforced silicon carbide matrix, a carbon fiber-reinforced silicon carbide matrix and a silicon carbide fiber-reinforced silicon nitride matrix. Particularly useful silicon-metal alloys can include molybdenum-silicon alloys, niobium-silicon alloys, iron-silicon alloys, and alloys of zirconium, hafnium, titanium, chromium, tungsten, boron, platinum, and tantalum.

The top coat resists recession of Si-containing volatile species when exposed to water vapor or steam, for example, in a steam turbine. The top coat can include binary or multicomponent oxides such as HfO₂, ZrO₂, or Gd₂Hf₂O₇, Gd₂Zr₂O₇, refractory metal oxides. In other exemplary embodiments, the top coat can include silicates with low(er) SiO₂ activities. In another exemplary embodiment the top coat can include (rare earth) RE-monosilicates, disilicates and (alkaline earth) AE alumino silicates, silicates of Hafnium and zirconium. Furthermore, the top coat may also have more than 1 phase and may contain mixtures of any of the above, including mixtures of any two, three, four or more of the above.

Furthermore, the top coat may have a porosity. Although in some cases there may be very minimal porosity, if any.

The top coat can have a thickness of at least 0.5 mils (0.0005 inch) (0.127 mm), for example, between 3 to 30 mils (0.0762 to 0.762 mm) or between 3 to 5 mils (0.0762 to 0.127 mm), for example, 2 mils to 3 mils (0.0508 to 0.0762 mm), 3 mils to 4, 5 or 6 mils (0.0762 mm to 0.1016, 0.127 or 0.1524 mm), 4 mils to 5 or 6 mils (0.1016 mm to 0.127 or 0.1524 mm), including various combination of upper and lower limits especially between 3 to 30 mils (0.0762 to 0.762 mm).

The thickness of the environmental barrier coating may be within the range of 3 to 30 mils(0.0762 to 0.762 mm).

The top coat can be applied by thermal spray methods, including air plasma spray, suspension plasma spray, low pressure or vacuum plasma spray, high velocity oxygen or air fuel spraying, flame spraying, vapor deposition, including, atomic layer deposition, chemical vapor deposition, or electron-beam physical vapor deposition.

In alternative embodiments, the top coat and also the environmental barrier coating can each be applied by slurry based methods including dip or spray coating, painting, electrophoretic deposition and the like.

### Specific Embodiments:

- Embodiment #1
   - A multi-layer EBC with a bond coat layer comprising a
      75% vol.% SiC gettering phase,
      20 vol.% SiO₂ matrix phase, and
      5 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C (Noted is that the silica is crystalline after processing, and that there is no other additional crystalline phase for this embodiment.)
- Embodiment #2
   - A multi-layer EBC with a bond coat layer comprising a 50% vol.% SiC gettering phase,
      25 vol.% ZrSiO₄,
      20 vol.% SiO₂ matrix phase, and
      5 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C
      In an embodiment, this embodiment is part of a broader embodiment wherein:
         40 - 70 vol.% SiC gettering phase,
         10 - 30 vol.% ZrSiO₄,
         10 - 30 vol.% SiO₂ matrix phase, and
         5 - 10 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C
- Embodiment #2b
   - A multi-layer EBC with a bond coat layer comprising a 40-70% vol.% SiC gettering phase,
      5-50 vol.% ZrSiO₄,
      5-20 vol.% SiO₂ matrix phase, and
      1-10 vol. % self-healing phase composed of a calcium alumino-silicate glass with an incipient melting point between 1150 and 1200°C and viscosity between 1,000 and 50,000 Pa•s at 1260°C and 10 and 500 Pa•s at 1482°C
- Embodiment #3
   - A multi-layer EBC with a bond coat layer comprising a 50% vol.% SiC gettering phase,
      25 vol.% Al₆Si₂O₁₃,
      20 vol.% SiO₂ matrix phase, and
      5% self-healing phase composed of a calcium alumino-silicate glass with an incipient melting point between 1150 and 1200°C and viscosity between 1,000 and 50,000 Pa•s at 1260°C and 10 and 500 Pa•s at 1482°C
- Embodiment #4
   - A multi-layer EBC with a bond coat layer comprising a
      50% vol.% SiC gettering phase,
      20-25 vol.% Al₆Si₂O₁₃
      20-25 vol.% SiO₂ matrix phase, and
      3-5 vol. % self-healing phase composed of a rare earth aluminate silicate glass with an incipient melting point between 1150 and 1200°C and viscosity between 1,000 and 50,000 Pa•s at 1260°C and 10 and 500 Pa•s at 1482°C.
- Embodiment #5
   - A multi-layer EBC with a bond coat layer comprising a
      40-70% vol.% SiC gettering phase,
      5-50 vol.% ZrSiO₄,
      5-20 vol.% SiO₂ matrix phase, and
      1-10 vol. % self-healing phase composed of a ytterbium aluminum silicate glass with an incipient melting point between 1350 and 1500°C and viscosity between 1,000 and 50,000 Pa•s at 1260 °C and 10 and 500 Pa•s at 1482 °C.

### Brief Description of Drawing:

Implementations of the inventive concepts disclosed herein may be better understood when consideration is given to the following detailed description thereof. Such descriptions make reference to the included drawings, which are not necessarily to scale, and which some features may be exaggerated and some features may be omitted or may be represented schematically in the interest of clarity. Like reference numerals in the drawings may represent and refer to the same or similar element, feature, or function.
- Fig. 1: illustrates a coating system,
- Fig. 2: illustrates the phase constitution of specific embodiment #2 in Table 1 as a function of temperature,
- Fig. 3: illustrates the viscosity as a function of temperature for the slag (molten oxide) present in embodiment # 2 in Table 1,
- Fig. 4: illustrates the phase constitution of specific embodiment #2 in Table 2 as a function of temperature
- Fig. 5: illustrates the viscosity as a function of temperature for the slag (molten oxide) present in embodiment # 2 in Table 1

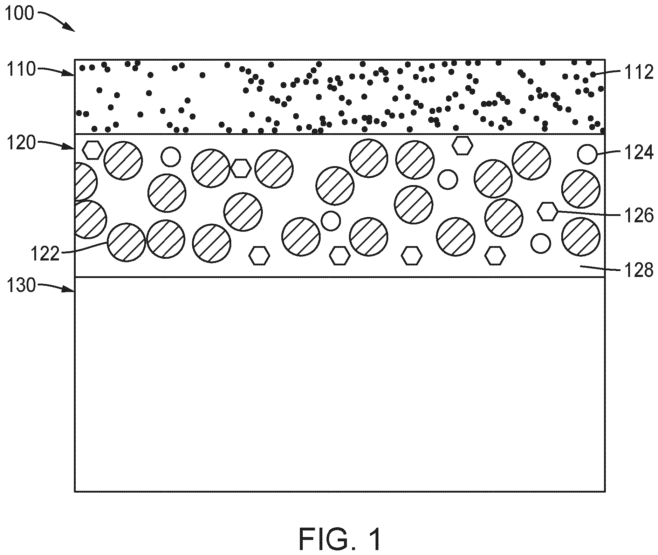

In more detail, Fig. 1 shows a coating system 100 on a CMC component/substrate 130, where the bond coat 120 contains, in a matrix 128, particles of a crystalline phase 124, a self-healing glass 126 as well as gettering particles 122. On top of the bond coat is a top coat 110, which may have a porosity 112.

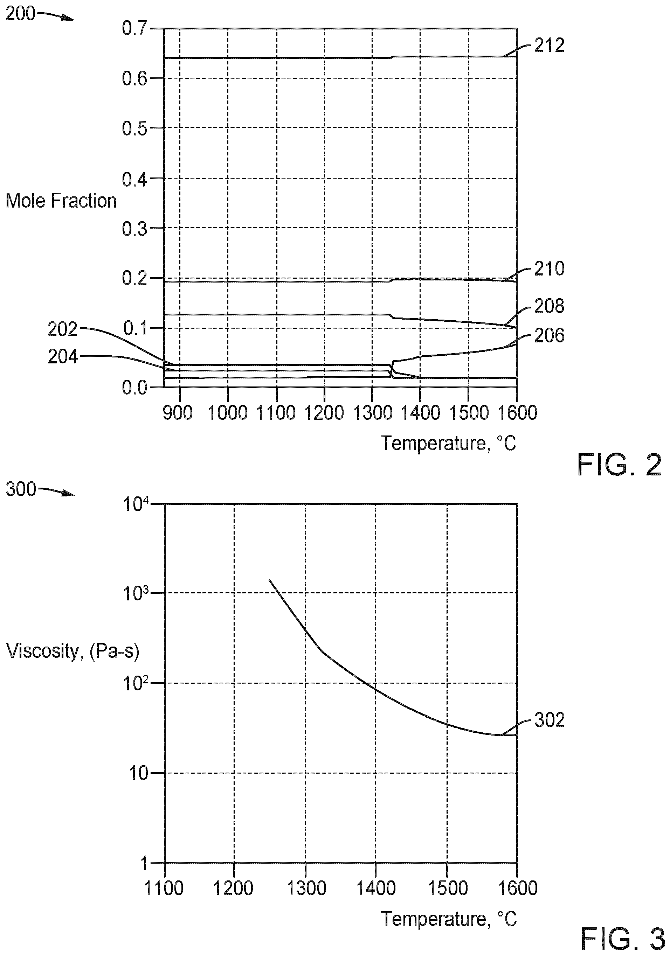

Fig. 2 shows a mole fraction of the phases present in embodiment 2 in Table 1 above, where with increasing temperature the phases of various components change. The slag contains mostly SiC, SiO₂, ZrSiO₄ and a molten oxide.

Fig. 3 shows a viscosity graph of embodiment 2 in Table 1.

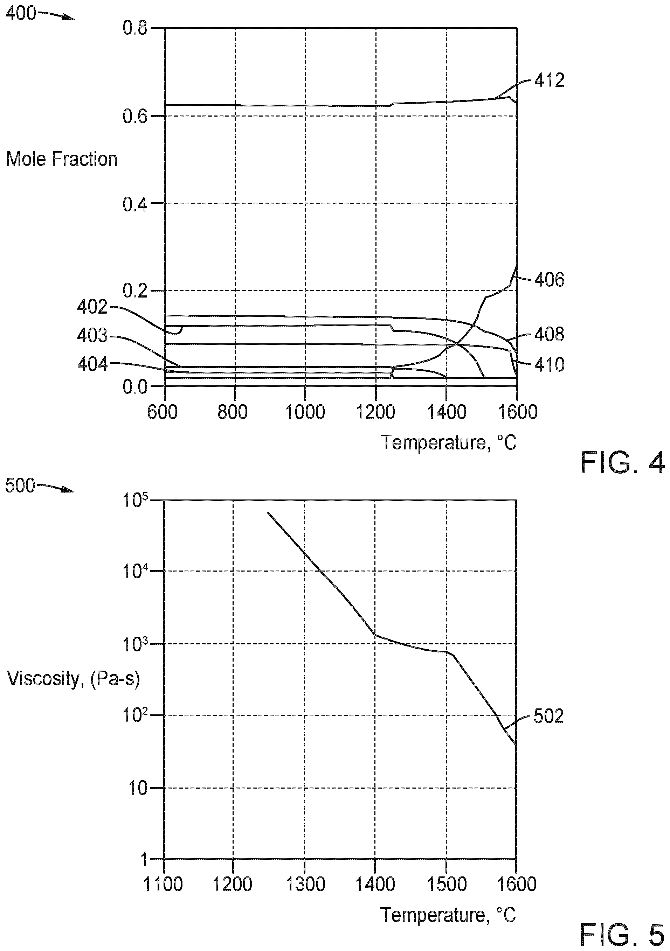

Fig. 4 shows a mole fraction of the phases present in embodiment 2 in Table 2 above, where with increasing temperature the phases of various components change. The slag contains mostly SiC, SiO₂, ZrSiO₄, mullite and a molten oxide

Fig. 5 shows a viscosity graph of embodiment 2 in Table 2.

### Legend for Figures:

Fig. 1:
   100 - Coating System
   110 - Top Coat
   112 - Porosity
   120 - Bond Coat
   122 - Gettering Particle
   124 - Crystalline Phase
   126 - Self-healing Glass
   128 - Bond Coat Matrix
   130 - CMC
Fig. 2:
   200 - Graph of the phase constitution diagram of specific embodiment #2 in Table 1 as a function of temperature
   202 - Ca₂ZrSi₄O₁₂
   204 - CaAl₂Si2O₈
   206 - Slag
   208 - SiO₂
   210 - ZrSiO₄
   212 - SiC
Fig. 3:
   300 - Graph of the viscosity as a function of temperature for the slag (molten oxide) present in embodiment # 2 in Table 1
   302 - Slag
Fig. 4:
   400 - Graph of the phase constitution of specific embodiment #2 in Table 2 as a function of temperature
   402 - Al₆Si₂O₁₃
   403 - Mg₂Al₄Si₅O₁₈
   404 - BaAl₂Si₂O₈
   406 - Slag
   408 - SiO₂
   410 - ZrSiO₄
   412 - SiC
Fig. 5:
   500 - Graph of the viscosity as a function of temperature for the slag (molten oxide) present in embodiment # 2 in Table 1
   502 - Slag

### Example of Method of Preparation:

The bond coating can be fabricated using a slurry coating method. The appropriate slurries can be prepared by mixing components, such as, silicon carbide, hafnium silicate, barium-magnesium alumino-silicate, and powder of silicon oxide in a carrier fluid, such as water. The slurry can be mixed by a ball milling and the resulting slurry can be sprayed onto an underlying substrate. The slurry can be dried at room temperature and cured at 200°C for 1 hour. The coating can then be sintered at 1500°C for 1 hour in air.

As will be appreciated by one skilled in the art, the embodiments described herein may be embodied as a method of use or preparation, a product, including a part for use in various assemblies, or use per se.

The description of the embodiments described herein has been presented for purposes of illustration and description, but is not intended to be exhaustive or limited to the invention in the form disclosed. Many modifications and variations will be apparent to those of ordinary skill without departing from the scope and spirit of the invention. The embodiments were chosen and described in order to best explain the principles of the invention and the practical application, and to enable others of ordinary skill in the art to understand the invention for embodiments with various modifications as are suited to the particular use contemplated.

Modifications and equivalents may be made to the features disclosed without departing from the spirit or scope of the invention. Thus, it is intended that the embodiments described herein covers the modifications and variations disclosed above, including changes that lead to equivalents, i.e., modifications and equivalents may be made to the features of the claims without departing from the scope of the invention.

## Claims

1. An environmental barrier coating having a bond coat layer (120), and comprising in said bond coat layer (120):
an oxide matrix (128);
and dispersed throughout said oxide matrix (128):
i) an oxidant gettering phase (122) that forms silicon oxide;
ii) a SiO₂ based phase, that may be amorphous or crystalline;
iii) a crystalline phase (124); and
iv) an amorphous oxide phase (126), which is a self-healing phase (126) having the ability to soften or melt and flow into cracks formed in the oxide matrix (128) at predetermined temperatures that are below the melting temperature of the oxide matrix (128),
wherein:
the amorphous oxide phase (126) comprises an alkaline earth alumino-silicate glass; and
the crystalline phase (124) comprises Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅, Mg₂Al₄Si₅O₁₈, BaAl₂Si₂O₈, BaZrSi₃O₉, Y₂Si₂O₇, Yb₂Si₂O₇ and/or Al₂O₃, and in case the SiO₂ based phase of ii) is amorphous, the crystalline phase (124) may additionally include among the options above crystalline SiO₂.

2. The environmental barrier coating according to claim 1, wherein:
the amorphous oxide phase (126) comprises a calcium alumino-silicate glass with an incipient melting point between 1150 and 1300°C and viscosity between 200 and 20,000 Pa•s at 1300°C and 1 and 500 Pa•s at 1500°C, which calcium alumino-silicate glass is optionally doped with one or more rare earth elements or transition metal elements; or
the amorphous oxide phase (126) comprises a barium-magnesium alumino silicate glass.

3. The environmental barrier coating according to claim 1 or 2, which contains in the bond coat layer (120):
the oxide matrix (128) in an amount of 1 to 25 vol. %;
i) the oxidant gettering phase (122) in an amount of 25 to 75 vol. %;
ii) the crystalline phase (124) in an amount of 5 to 50 vol. %; and
iii) the amorphous oxide phase (126) in an amount of 1 to 10 vol. %.

4. The environmental barrier coating according to any preceding claim, wherein the oxide matrix (128) is SiO₂.

5. The environmental barrier coating according to any preceding claim, wherein the oxidant gettering phase (122) is SiₓO_{y}C_{z} where 0.5≤x<1; 0≤y<2; 0≤z<2, or is Si₃N₄ or SiCN; or wherein the oxidant gettering phase (122) is SiC.

6. The environmental barrier coating according to any preceding claim, wherein the bond coat layer (120) comprises:
50% vol.% SiC gettering phase (122);
25 vol.% one of ZrSiO₄, Ca₂HfSi₄O₁₂, or Al₆Si₂O₁₃;
20 vol.% SiO₂ matrix phase (128); and
5 vol. % self-healing phase (126) composed of a calcium alumino-silicate glass with an incipient melting point between 1150 and 1200°C and viscosity between 1,000 and 50,000 Pa•s at 1260°C and 10 and 500 Pa•s at 1482°C.

7. The environmental barrier coating according to any of claims 1 to 5, wherein the bond coat layer (120) comprises:
40 - 70 vol.% SiC gettering phase (122);
10 - 30 vol.% ZrSiO₄;
10 - 30 vol.% SiO₂ matrix phase (128); and
5 - 10 vol. % self-healing phase (126) composed of a calcium alumino-silicate glass with an incipient melting point between 1150 and 1200°C and viscosity between 1,000 and 50,000 Pa•s at 1260°C and 10 and 500 Pa•s at 1482°C.

8. The environmental barrier coating according to any of claims 1 to 5, wherein the bond coat layer (120) comprises:
40-70% vol.% SiC gettering phase (122);
5-50 vol.% ZrSiO₄;
5-20 vol.% SiO₂ matrix phase (128); and
1-10 vol. % self-healing phase (126) composed of a calcium alumino-silicate glass with an incipient melting point between 1150 and 1200°C and viscosity between 1,000 and 50,000 Pa•s at 1260°C and 10 and 500 Pa•s at 1482°C.

9. The environmental barrier coating according to any of claims 1 to 5, wherein the bond coat layer (120) comprises:
50% vol.% SiC gettering phase (122);
20-25 vol.% Al₆Si₂O₁₃;
20-25 vol.% SiO₂ matrix phase (128); and
3-5 vol. % self-healing phase (126) composed of a rare earth aluminate silicate glass with an incipient melting point between 1150 and 1200°C and viscosity between 1,000 and 50,000 Pa•s at 1260°C and 10 and 500 Pa•s at 1482°C.

10. The environmental barrier coating according to any of claims 1 to 5, wherein the bond coat layer comprises:
40-70% vol.% SiC gettering phase (122);
5-50 vol.% ZrSiO₄;
5-20 vol.% SiO₂ matrix phase (128); and
1-10 vol. % self-healing phase (126) composed of a ytterbium aluminum silicate glass with an incipient melting point between 1350 and 1500°C and viscosity between 1,000 and 50,000 Pa•s at 1260 °C and 10 and 500 Pa•s at 1482 °C.

11. The environmental barrier coating according to any preceding claim, wherein the oxidant gettering phase (122), the crystalline phase (124) and/or the amorphous oxide phase (126) are dispersed in the oxide matrix (128) in the form of discrete particles.

12. A turbine vane or blade or turbine engine component, comprising thereon the coating according to any preceding claim.

13. An environmental coating system (100) on a silicon containing material (130), including the environmental barrier coating of any of claims 1 to 11 and a protective top coat (110) on top of the bond coat layer (120).

14. The environmental barrier coating system according to claim 13, wherein the silicon containing material (130) is a ceramic matrix composite material (130); and/or, wherein the top coat (110) comprises binary or multicomponent oxides, HfO₂, ZrO₂, Gd₂Hf₂O₇, Gd₂Zr₂O₇, refractory metal oxides, silicates, rare earth-monosilicates or disilicates, alkaline earth alumino silicates, or silicates of hafnium or zirconium.

15. A method for protecting a ceramic matrix composite material (130) comprising applying thereon a bond coat layer (120) and on top thereof a top coat (110), wherein the bond coat layer (120) comprises;
an oxide matrix (128),
and dispersed throughout said oxide matrix (128):
i) an oxidant gettering phase (122) that forms silicon oxide,
ii) a SiO₂ based phase, that may be amorphous or crystalline,
iii) a crystalline phase (124), and
iv) an amorphous oxide phase (126), which is a self-healing phase (126) having the ability to soften or melt and flow into cracks formed in the oxide matrix (128) at predetermined temperatures that are below the melting temperature of the oxide matrix (128),
wherein
the amorphous oxide phase (126) comprises an alkaline earth alumino-silicate glass; and
the crystalline phase (124) comprises Al₆Si₂O₁₃, ZrSiO₄, HfSiO₄, Ca₂ZrSi₄O₁₂, Ca₂HfSi₄O₁₂, CaAl₂Si₂O₈, CaSiO₃, Al₂TiO₅ ,Mg₂Al₄Si₅O₁₈, BaAl₂Si₂O₈ , BaZrSi₃O₉, Y₂Si₂O₇, Yb₂Si₂O₇, and/or Al₂O₃, and in case the SiO₂ based phase of ii) is amorphous, the crystalline phase (124) may additionally include among the options above crystalline SiO₂.
